# EUROPÄISCHE PATENTSCHRIFT

(11) **EP 0 578 628 B1**
(45) Veröffentlichungstag und Bekanntmachung des Hinweises auf die Patenterteilung: **26.11.1997**
(21) Anmeldenummer: 93890123.8
(22) Anmeldetag: 21.06.1993
(51) Int. Cl.: C21B 13/02, F27D 3/08

(54) **Fördereinrichtung zum dosierten Fördern von Schüttgut**
Conveying arrangement for the dosed conveyance of bulk material
Dispositif pour convoyer en doses des matières en vrac

(30) Priorität: 07.07.1992 AT 1388/92
(43) Veröffentlichungstag der Anmeldung: 12.01.1994
(73) Patentinhaber: DEUTSCHE VOEST-ALPINE INDUSTRIEANLAGENBAU GMBH, 40094 Düsseldorf (DE)
(72) Erfinder: Wallner, Felix, Dr., A-4020 Linz (AT); Kepplinger, Leopold Werner, Dipl.-Ing., Dr., A-4060 Leonding (AT); Böhm, Christian, Dipl.-Ing., A-4600 Wels (AT)
(74) Vertreter: Kopecky, Helmut, Dipl.-Ing. Kopecky & Schwarz Patentanwälte

(56) Entgegenhaltungen:
- EP-A- 0 085 290
- EP-B- 0 048 008
- DE-B- 1 238 941
- DE-C- 411 175

## Beschreibung

Die Erfindung betrifft eine Fördereinrichtung zum dosierten Fördern von Schüttgut, mit einem eine Eintritts- und eine Austrittsöffnung aufweisenden Förderkanal und einer im Förderkanal vorgesehenen, zumindest von der Eintrittsöffnung des Förderkanales bis zur Austrittsöffnung reichenden Förderschnecke, die sowhol einen von Paddeln gebildeten Schneckengang als auch einen daran anschließenden und an dem der Austrittsöffnung des Förderkanales zugeordneten Ende angeordneten weiteren Schneckengang aufweist, der von einer ununterbrochenen Wendel gebildet ist.

Eine Einrichtung dieser Art ist aus der US-A - 3,823,920 bekannt. Diese Einrichtung ist mit einer Förderschnecke versehen, die sowohl einen von Paddeln als auch einen von einer ununterbrochenen Wendel gebildeten Schneckengang aufweist. Diese bekannte Einrichtung dient in erster Linie zum Mischen von für die Glasherstellung eingesetztem Material, wobei es darum geht, Sand mit Kalkstein und anderen Zusätzen für die Glasherstellung gut zu durchmischen, zu durchfeuchten und in die Schmelzwanne einzubringen. Aus diesem Grund ist die Fördereinrichtung gemäß der US-A - 3,823,920 sehr lang gestaltet und mit einer ebenfalls sehr lang ausgebildeten Förderschnecke, bei der sich sowohl die ununterbrochene Wendel als auch der von Paddeln gebildete Schneckengang über eine größere Länge erstrecken, versehen.

Eine Einrichtung zum Fördern von heißen Eisenschwammpartikeln aus einem Direktreduktions-Schachtofen in einen Einschmelzvergaser ist aus der EP-B -0 048 008 bekannt. Der Schneckengang dieser bekannten Fördereinrichtung ist zur Gänze von hintereinander angeordneten einzelnen Paddeln gebildet, wobei zwischen benachbarten Paddeln ein Freiraum vorgesehen ist, durch den das Schüttgut hindurchtreten kann.

Schnecken solcher Art, sogenannte "Paddelschnecken", haben sich insoferne bewährt, als das Schüttgut durch die Paddeln immer wieder aufgerissen wird, so daß es nicht im Förderkanal zusammenbacken kann, was im Fall der Verwendung einer einteiligen Förderschnecke, also einer durchgehenden Wendel, zur Bildung eines Art Rohres im Inneren des Förderkanales führen kann, wobei das zu fördernde Material rund um die Schnecke festsitzt und die Schnecke leer durchläuft. Ein weiterer wesentlicher Vorteil einer Paddelschnecke ist darin zu sehen, daß die Fertigung wesentlich einfacher und kostengünstiger ist, insbesondere bei großen Förderschneckendurchmessern von z.B. 1 m, als von einer Schnecke mit einem von einer ununterbrochenen Wendel gebildeten Schneckengang.

Paddelschnecken weisen jedoch auch Nachteile auf, so z.B. ist es erforderlich, den Förderkanal - was teuer und bei fliegend gelagerten Förderschnecken konstruktiv aufwendig ist - über eine bestimmte Länge zu erstrecken, da es bei einem zu kurzen Förderkanal zu einem unkontrollierten Ausfließen des Schüttgutes durch die Austrittsöffnung des Förderkanales kommen kann, denn das Schüttgut tritt, wie oben erwähnt, durch den zwischen den Paddeln vorhandenen Freiraum selbsttätig entsprechend seinem Schüttgutwinkel hindurch. Um ein Verklemmen des Schüttgutes zwischen dem Umfang der Paddeln und der Innenauskleidung des Förderkanales - der bei Paddelschnecken nahezu zur Gänze mit Schüttgut gefüllt ist - zu verhindern und eine ausreichende Ausweichmöglichkeit für Schüttgutteilchen zu ermöglichen, ist es erforderlich, einen relativ großen Spalt zwischen dem Außenumfang der Paddeln und der Innenauskleidung des Förderkanales vorzusehen. Dieser Spalt ist in der Regel wesentlich größer als der maximale Korndurchmesser des zu fördernden Schüttgutes. Hierdurch ist jedoch eine hohe Gasdurchlässigkeit gegeben.

Ist man aus konstruktiven Gründen gezwungen, den Förderkanal besonders kurz auszuführen, ergibt sich bei Verwendung einer Paddelschnecke die Notwendigkeit, die Austrittsöffnung mit einer eigenen Absperrvorrichtung zu versehen, die das selbsttätige Ausfließen von Schüttgut bei Stillstand der Förderschnecke verhindert.

Die Erfindung bezweckt die Vermeidung dieser Nachteile und Schwierigkeiten und stellt sich die Aufgabe, eine Fördereinrichtung der eingangs beschriebenen Art zu schaffen, deren Herstellung im wesentlichen denselben Aufwand erfordert wie die Herstellung einer Paddelschnecke und bei der die oben erläuterte Rohrbildung im Inneren des Förderkanales und das Leerdurchdrehen der Schnecke zuverlässig verhindert ist, wobei jedoch mit einem besonders kurzen Förderkanal und damit mit einer sehr kurzen Förderschnecke das Auslangen gefunden wird, ohne daß es erforderlich ist, eine eigene Absperrvorrichtung an der Austrittsöffnung vorzusehen. Weiters soll die erfindungsgemäße Fördereinrichtung einen erhöhten Strömungswiderstand gegen das Strömen von Gas durch den Förderkanal aufweisen.

Diese Aufgabe wird erfindungsgemäß dadurch gelöst, daß zum Fördern des Schüttgutes, wie von Erz, Kohle, Eisenschwamm etc., von einem ersten metallurgischen Gefäß in ein zweites, der von den Paddeln gebildete Schneckengang an einem Endbereich der Förderschnecke angeordnet ist, der in das Innere des ersten metallurgischen Gefäßes ragt, und daß sich die Wendel über zumindest eine halbe Windung und maximal über zwei Windungen erstreckt und das Ende der Wendel im Bereich der Austrittsöffnung für das zu fördernde Schüttgut angeordnet ist, welche Austrittsöffnung von einem nach unten gerichteten Stutzen umgeben ist, wobei der Stutzen zu dem anderen metallurgischen Gefäß führt, und wobei weiters der mit der Wendel versehene Endbereich der Förderschnecke über eine Lagerung an dem zugehörigen Ende des Förderkanales gelagert ist.

Ein besonders hoher Strömungswiderstand gegen das Durchströmen von Gas wird nach einer bevorzugten Ausführungsform dadurch erreicht, daß der von der ununterbrochenen Wendel gebildete Schneckengang einen größeren Außendurchmesser aufweist als der in Fortsetzung des Schneckenganges von den Paddeln gebildete Schneckengang, wobei die Gefahr des Klemmens von Schüttgut in dem Spalt zwischen dem Außenumfang der Förderschnecke und der Innenwand des Förderkanales dadurch vermieden ist, daß der Schneckengang in dem Teil, in dem er von einer ununterbrochenen Wendel gebildet ist infolge der keine Zwischenräume - die das Fließen des Schuttgutes erleichtern würden - aufweisenden ununterbrochenen Wendel, nicht mehr zur Ganze mit Schüttgut gefüllt ist.

Gemäß einer bevorzugten Ausführungsform ist zwischen dem Außenumfang der ununterbrochenen Wende und der Innenwand des Förderkanales ein Ringspalt vorgesehen, dessen Breite in etwa dem maximalen Korndurchmesser des zu fordernden Schüttgutes entspricht.

Mit einem sehr kurzen Förderkanal findet man das Auslangen, wenn sich die ununterbrochene Wendel über die gesamte Länge des Förderkanales von der Eintritts- bis zur Austrittsöffnung desselben erstreckt. Diese bevorzugte Ausführungsform gewährleistet auch einen großen Widerstand gegen Durchströmen von Gas und verhindert zuverlässig ein selbständiges Durchfließen des Schüttgutes zur Austrittsöffnung bei Stillstand der Förderschnecke in jeder Stellung derselben.

Hierbei erstreckt sich vorzugsweise die ununterbrochene Wendel über mindestens eine ¾-Windung, vorzugsweise über eineinhalb bis zwei Windungen.

Wenn Schüttgut zu fördern ist, bei dem durch Einklemmen von Körnern ein großer Verschleiß stattfinden kann, erstreckt sich vorteilhaft der von Paddeln gebildete Schneckengang bis in das Innere des Förderkanales, vorzugsweise mit einer ½-Windung bis zu 1¼-Windungen. Durch die Paddeln, d.h. deren Zwischenräume, innerhalb des Förderkanales wird ein Ausweichen der Körner des Schüttgutes nahe der Eintrittsöffnung, wo der Schneckengang zur Gänze infolge Nachfließens des Schüttgutes gefüllt ist, ermöglicht, so daß ein Einklemmen der Körner zwischen dem Außenumfang der Förderschnecke und der Innenwand des Förderkanales verhindert wird.

Durch die Erfindung ist es möglich, mit einem besonders kurzen Förderkanal auszukommen, wobei die Länge des Förderkanales von der Eintrittsöffnung bis zur Austrittsöffnung vorzugsweise gleich oder größer ist wie bzw. als
a) die auf die Drehachse des Schneckenförderers gerichtete Projektion der ununterbrochenen Wendel plus
b) die Projektion der unter dem Schüttgutneigungswinkel durch das näher bei der Eintrittsöffnung liegende Ende der Wendel gelegten Geraden auf die Drehachse der Förderschnecke, so weit sich die Gerade nach oben bis zu ihrem Schnittpunkt mit der obersten Erzeugenden des Förderkanales erstreckt.

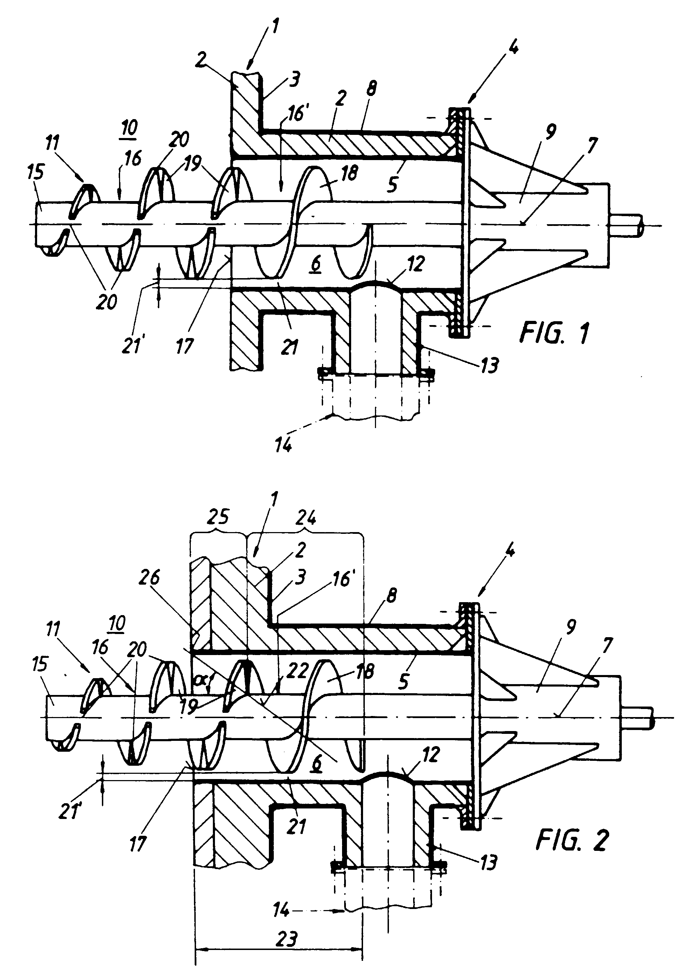

Die Erfindung ist anhand mehrerer in der Zeichnung dargestellter Ausführungsformen näher erläutert, wobei die Fig. 1 bis 4 jeweils einen Axiallängsschnitt durch eine Fördereinrichtung nach jeweils einer Ausführungsform veranschaulichen.

In einer etwa vertikalen Seitenwand 1 eines Direktreduktions-Schachtofens, die von einer feuerfesten Auskleidung 2 und einem diese umgebenden Stahlmantel 3 gebildet ist, ist eine im rechten Winkel zu dieser Seitenwand 1 angeordnete Fördereinrichtung 4 vorgesehen. Die Fördereinrichtung 4 weist einen von einer Stahlinnenauskleidung 5 (oder einer Auskleidung aus Mauerwerk) gepanzerten Förderkanal 6 mit Kreisquerschnitt auf, dessen Mittelachse 7 sich etwa rechtwinkelig zur Seitenwand 2 erstreckt. Die Innenauskleidung 5 ist von feuerfestem Material 2 umgeben, das wiederum von einem Stahlmantel 8 eingeschlossen ist.

Am äußeren freien Ende des Förderkanales 6 ist eine Lagerung 9 und ein nicht dargestellter Antrieb für eine durch den Förderkanal 6 in das Innere 10 des Direktreduktions-Schachtofens frei auskragend ragende Förderschnecke 11 angeflanscht. Im Boden des Förderkanales 6 ist eine Austrittsöffnung 12 für zu förderndes Schüttgut vorgesehen, die von einem vertikal nach unten gerichteten Stutzen 13 umgeben ist, an den ein Fallrohr 14 angeflanscht ist.

Die Förderschnecke 11 ragt mit ihrer Schneckenwelle 15 in Richtung des Zentrums des Direktreduktions-Schachtofens und weist einen Schneckengang 16, 16' auf, der von der Eintrittsöffnung 17, das ist die Einmündung des Förderkanales 6 in das Innere 10 des Direktreduktions-Schachtofens, zum freien Ende der Schneckenwelle 15 hin konisch verjüngt ausgebildet ist, um eine über die Querschnittsfläche des Direktreduktions-Schachtofens gleichmäßige Entnahme von Schüttgut sicherzustellen.

Erfindungsgemäß ist der Schneckengang 16, 16' der Förderschnecke über die Länge der Förderschnecke 11 unterschiedlich ausgebildet, u.zw. ist der Schneckengang 16' an dem Ende der Förderschnecke 11, das der Austrittsöffnung 12 des Förderkanales 6 zugeordnet ist, von einer ununterbrochenen Wendel 18, d.h. von einem einstückigen zu einer Schraubenfläche geformten Stahlblech gebildet, die sich gemäß der in Fig. 1 dargestellten Ausführungsform bis zur Eintrittsöffnung 17 mit 1¾-Windungen erstreckt. Anschließend an diese Wendel 18 ist der Schneckengang 16 von nacheinander schraubenflächtig angeordneten Paddeln 19 gebildet, wobei benachbarte Paddel einen Zwischenraum 20 einschließen. Ein Paddel 19 erstreckt sich über etwa eine Viertelwindung; es könnte jedoch auch ein geringeres Umfangs-Ausmaß aufweisen und sich beispielsweise nur über eine Sechstelwindung erstrecken.

Die Paddel 19 liegen mit ihren Flächen nicht genau auf der idealen Schraubenfläche, sondern weichen von dieser geringfügig ab, wodurch die Paddel 19 das im Inneren 10 des Direktreduktions-Schachtofens liegende Schüttgut aufreißen und ein Anbacken des Schüttgutes an den Paddeln 19 bzw. ein Festsetzen von Schüttgut im Schneckengang 16 vermieden wird.

Wie Fig. 1 erkennen läßt, fließt das Schüttgut an der Eintrittsöffnung in den von der ununterbrochenen Wendel 18 gebildeten Schneckengang 16' ein, so daß dieser lediglich an seinem Beginn, also in nächster Nähe der Eintrittsöffnung 17 vollständig gefüllt ist. Am Durchfließen von der Eintrittsöffnung 17 zur Austrittsöffnung 12 wird das Schüttgut - bei Stillstand der Förderschnecke 11 - durch die ununterbrochene Wendel 18 gehindert. Die ununterbrochene Wendel 18 bildet mit ihrem Außenumfang zur Innenwand, d.h. zur Innenauskleidung 5 des Förderkanales 6, einen Ringspalt 21, dessen Breite 21' etwa der größten Korngröße des zu fördernden Schüttgutes entspricht. Durch diesen verhältnismäßig engen Ringspalt 21 wird ein relativ großer Widerstand gegen das Durchströmen von Gas gebildet.

Gemäß Fig. 2 erstreckt sich die ununterbrochene Wendel 18 nicht ganz bis zur Eintrittsöffnung 17, sondern hört vor dieser nach 1½ Windungen auf, so daß sich der von den Paddeln 19 gebildete Schneckengang 16 etwa eine ¾-Windung in das Innere des Förderkanales 6 erstreckt. Bei dieser Ausführungsform ist daher der Schneckengang 16' nicht mehr zur Gänze gefüllt, u.zw. infolge des sich ausbildenden Schüttgutkegels, der durch die Gerade 22 mit dem Schüttgutneigungswinkel α angedeutet ist.

Durch diese Ausgestaltung ist die Gefahr eines Klemmens von Schüttgut zwischen dem Außenumfang der Förderschnecke 11 und der Innenauskleidung 5 des Förderkanales 6 und damit ein Verschleiß der Förderschnecke 6 wesentlich herabgesetzt, da der Schneckengang lediglich nahe der Eintrittsöffnung 17 zur Gänze gefüllt ist und ein Ausweichen der Körner durch die Zwischenräume 20 zwischen den Paddeln 19 möglich ist. Der Außendurchmesser des von den Paddeln 19 gebildeten Schneckendurchganges 16 ist geringer bemessen als der Außendurchmesser des von der ununterbrochenen Wendel gebildeten Schneckenganges 16', wodurch der Verschleiß der Paddel 19 ebenfalls herabgesetzt werden kann.

Wie aus Fig. 2 ersichtlich ist, weist der Förderkanal 6 zwischen der Eintritts- 17 und Austrittsöffnung 12 eine Länge 23 auf, die der Projektion 24 der ununterbrochenen Wendel 18 auf die Drehachse 7 plus der Projektion 25 der Geraden 22, die sich unter dem Schüttgutneigungswinkel α von der obersten Stelle 26 der Eintrittsöffnung 17 des Förderkanales 6 bis zu dem der Eintrittsöffnung näher liegenden Ende der Wendel 18 erstreckt, entspricht. Dies ist die Mindestlänge, die für eine einwandfreie Funktion der Fördereinrichtung zweckmäßig ist. Diese Länge kann auch überschritten werden, was jedoch nach Möglichkeit aus Kostengründen vermieden werden soll.

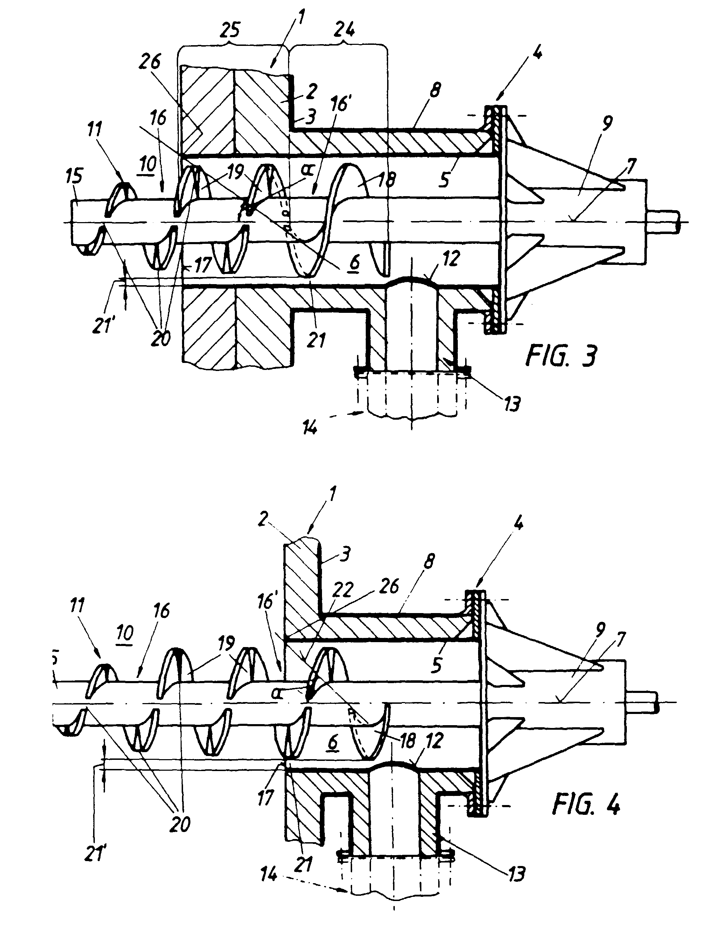

Gemäß der in Fig. 3 dargestellten Ausführungsform ist die ununterbrochene Wendel 18 etwas kürzer bemessen als gemäß der in Fig. 2 dargestellten Ausführungsform, was den Vorteil der einfacheren Herstellung aufweist. Dies ist bei größeren Dimensionen der Förderschnecke (z.B. Wellendurchmesser etwa 0,5 m, Durchmesser des Förderkanales etwa 1 m, Länge der Förderschnecke etwa 8 m, Dicke des die ununterbrochene Wendel bildenden Stahlbleches etwa 4 cm) von Bedeutung.

In Fig. 4 ist eine weitere Ausführungsform dargestellt, bei der die ununterbrochene Wendel 18 sich nur mehr über eine halbe Windung erstreckt. Bei dieser Variante wird das Schüttgut am selbständigen Durchfluß von der Eintrittsöffnung 17 zur Austrittsöffnung 12 nur dann gehindert, wenn sich die Wendel 18 in der in Fig. 4 dargestellten Position, also in ihrer untersten Lage, befindet. Erfolgt eine Drehung aus dieser Position, fließt, da der sich an der Eintrittsöffnung 17 bildende Schüttgutkegel, der durch die Gerade 22 angedeutet ist, bis über die Austrittsöffnung 12 reicht, das Schüttgut selbständig von der Eintrittsöffnung 17 zum Fallrohr 14, ohne daß die Förderschnecke 11 selbst sich in Drehbewegung befinden muß. Die Wendel 18 fungiert bei dieser Ausführungsform als Absperrorgan.

## Patentansprüche

1. Fördereinrichtung (4) zum dosierten Fördern von Schüttgut, mit einem eine Eintritts(17) und eine Austrittsöffnung (12) aufweisenden Förderkanal (6) und einer im Förderkanal (6) vorgesehenen, zumindest von der Eintrittsöffnung (17) des Förderkanales (6) bis zur Austrittsöffnung (12) reichenden Förderschnecke (11), die sowohl einen von Paddeln (19) gebildeten Schneckengang (16) als auch einen daran anschließenden und an dem der Austrittsöffnung (12) des Förderkanales (6) zugeordneten Ende angeordneten weiteren Schneckengang (16') aufweist, der von einer ununterbrochenen Wendel (18) gebildet ist, dadurch gekennzeichnet, daß zum Fördern des Schüttgutes, wie von Erz, Kohle, Eisenschwamm etc., von einem ersten metallurgischen Gefäß in ein zweites, der von den Paddeln (19) gebildete Schneckengang an einem Endbereich der Förderschnecke (11) angeordnet ist, der in das Innere (10) des ersten metallurgischen Gefäßes ragt, und daß sich die Wendel (18) über zumindest eine halbe Windung und maximal über zwei Windungen erstreckt und das Ende der Wendel im Bereich der Austrittsöffnung (12) für das zu fördernde Schüttgut angeordnet ist, welche Austrittsöffnung (12) von einem nach unten gerichteten Stutzen (13) umgeben ist, wobei der Stutzen (13) zu dem anderen metallurgischen Gefäß führt, und wobei weiters der mit der Wendel (18) versehene Endbereich der Förderschnecke (11) über eine Lagerung (9) an dem zugehörigen Ende des Förderkanales (6) gelagert ist.

2. Fördereinrichtung nach Anspruch 1, dadurch gekennzeichnet, daß der von der ununterbrochenen Wendel (18) gebildete Schneckengang (16') einen größeren Außendurchmesser aufweist als der in Fortsetzung des Schneckenganges (16') von den Paddeln (19) gebildete Schneckengang (16).

3. Fördereinrichtung nach Anspruch 2, dadurch gekennzeichnet, daß zwischen dem Außenumfang der ununterbrochenen Wendel (18) und der Innenwand (5) des Förderkanales (6) ein Ringspalt (21) vorgesehen ist, dessen Breite (21') in etwa dem maximalen Korndurchmesser des zu fördernden Schüttgutes entspricht.

4. Fördereinrichtung nach einem oder mehreren der Ansprüche 1 bis 3, dadurch gekennzeichnet, daß sich die ununterbrochene Wendel (18) über die gesamte Länge des Förderkanales (6) von der Eintritts- (17) bis zur Austrittsöffnung (12) desselben erstreckt (Fig. 1).

5. Fördereinrichtung nach Anspruch 4, dadurch gekennzeichnet, daß sich die ununterbrochene Wendel (18) über mindestens eine ¾-Windung, vorzugsweise über eineinhalb bis zwei Windungen erstreckt.

6. Fördereinrichtung nach einem oder mehreren der Ansprüche 1 bis 3, dadurch gekennzeichnet, daß der von Paddeln (19) gebildete Schneckengang (16) sich bis in das Innere des Förderkanales (6), vorzugsweise mit einer ½-Windung bis zu 1¼-Windungen erstreckt (Fig. 2, 3).

7. Fördereinrichtung nach einem oder mehreren der Ansprüche 1 bis 6, dadurch gekennzeichnet, daß die Länge des Förderkanales (6) von der Eintritts- (17) bis zur Austrittsöffnung (12) gleich oder größer ist wie bzw. als
a) die auf die Drehachse des Schneckenförderers gerichtete Projektion (24) der ununterbrochenen Wendel (18) plus
b) die Projektion (25) der unter dem Schüttgutneigungswinkel (α) durch das näher bei der Eintrittsöffnung liegende Ende der Wendel (18) gelegten Geraden auf die Drehachse (7) der Förderschnecke (11), so weit sich die Gerade (22) nach oben bis zu ihrem Schnittpunkt mit der obersten Erzeugenden des Förderkanales (6) erstreckt.

## Claims

1. A conveying arrangement (4) for the dosed conveyance of bulk material, comprising a conveying channel (6) including an entry opening (17) and a discharge opening (12), and a conveyor worm (11) provided in the conveying channel (6), extending at least from the entry opening (17) of the conveying channel (6) to the discharge opening (12) and provided both with a flight (16) formed by paddles (19) and with a further flight (16') following thereupon, which further flight is formed by a continuous helix (18) and is arranged on the end associated to the discharge opening (12) of the conveying channel (6), characterized in that for conveying the bulk material, such as ore, coal, sponge iron, etc., from a first metallurgical vessel into a second one, the flight formed by the paddles (19) is arranged at an end region of the conveyor worm (11) that projects into the interior (10) of the first metallurgical vessel and that the helix (18) extends at least over half a convolution and maximally over two convolutions, and the end of the helix is arranged in the region of the discharge opening (12) for the bulk material to be conveyed, which discharge opening (12) is surrounded by a downward oriented socket (13), wherein the socket (13) leads to the other metallurgical vessel and wherein further the end region of the conveyor worm (11) that is provided with the helix (18) is mounted at the pertaining end of the conveying channel (6) via a bearing means (9).

2. A conveying arrangement according to claim 1, characterized in that the flight (16') formed by the continuous helix (18) has a larger external diameter than the flight (16) formed by the paddles (19) and provided in the extension of the flight (16').

3. A conveying arrangement according to claim 2, characterized in that an annular gap (21) is provided between the outer periphery of the continuous helix (18) and the internal wall (5) of the conveying channel (6), the width (21') of which gap approximately corresponds to the maximum grain diameter of the bulk material to be conveyed.

4. A conveying arrangement according to one or several of claims 1 to 3, characterized in that the continuous helix (18) extends over the total length of the conveying channel (6), from the entry opening (17) to the discharge opening (12) of the same (Fig. 1).

5. A conveying arrangement according to claim 4, characterized in that the continuous helix (18) extends over at least three quarters of a convolution, preferably over one convolution and a half to two convolutions.

6. A conveying arrangement according to one or several of claims 1 to 3, characterized in that the flight (16) formed by the paddles (19) advantageously extends as far as into the interior of the conveying channel (6), preferably by half a convolution to one convolution and a quarter (Figs. 2, 3).

7. A conveying arrangement according to one or several of claims 1 to 6, characterized in that the length of the conveying channel (6) from the entry opening (17) to the discharge opening (12) is equal to, or larger than,
a) the projection (24) of the continuous helix (18) directed on the axis of rotation of the worm conveyor plus
b) the projection (25) of the straight line laid at the bulk angle (a) of the bulk material through the end of the helix (18) located closer to the entry opening, on the axis of rotation (7) of the conveyor worm (11), as far as the straight line (22) extends upwardly to its point of intersection with the uppermost generatrix of the conveying channel (6).

## Revendications

1. Dispositif de convoyage (4) pour convoyer de manière dosée des matières en vrac, comprenant un canal de convoyage (6) doté d'une ouverture d'entrée (17) et d'une ouverture de sortie (12), et une vis de convoyage (11) prévue dans le canal de convoyage (6) et s'étendant au moins depuis l'ouverture d'entrée (17) du canal de convoyage (6) jusqu'à l'ouverture de sortie (12), ladite vis de convoyage comprenant à' la fois un pas de vis (16) formé par des pales (19) et un autre pas de vis (16') qui s'y raccorde et qui est agencé à l'extrémité associée à l'ouverture de sortie (12) du canal de convoyage (6), ledit autre pas de vis étant formé par une spirale ininterrompue (18), caractérisé en ce que, pour convoyer les matières en vrac, telles que du minerai, du charbon, de la mousse de fer, depuis un premier récipient métallurgique jusque dans un second, le pas de vis formé par les pales (19) est agencé à une région terminale de la vis de convoyage (11) qui s'étend jusque dans l'intérieur (10) du premier récipient métallurgique, et en ce que la spirale (18) s'étend au moins sur une demie spire et au maximum sur deux spires, et l'extrémité de la spirale est agencée dans la région de l'ouverture de sortie (12) pour les matières en vrac à convoyer, ladite ouverture de sortie (12) étant entourée par un manchon (13) dirigé vers le bas, et ledit manchon (13) menant à l'autre récipient métallurgique, et dans lequel la région terminale de la vis de convoyage (11) pourvue de la spirale (18) est montée par l'intermédiaire de paliers (9) à l'extrémité associée du canal de convoyage (6).

2. Dispositif de convoyage selon la revendication 1, caractérisé en ce que le pas de vis (16') formé par la spirale ininterrompue (18) présente un diamètre extérieur plus important que le pas de vis (16) formé par les pales (19) en prolongement du pas de vis (16').

3. Dispositif de convoyage selon la revendication 2, caractérisé en ce qu'il est prévu entre la périphérie extérieure de la spirale ininterrompue (18) et la paroi intérieure (5) du canal de convoyage (6) une fente annulaire (21) dont la largeur (21') correspond approximativement au diamètre de particule maximum des matières en vrac à convoyer.

4. Dispositif de convoyage selon l'une ou plusieurs des revendications 1 à 3, caractérisé en ce que la spirale ininterrompue (18) s'étend sur la totalité de la longueur du canal de convoyage (6) depuis l'ouverture d'entrée (17) jusqu'à l'ouverture de sortie (12) de celui-ci (figure 1).

5. Dispositif de convoyage selon la revendication 4, caractérisé en ce que la spirale ininterrompue (18) s'étend sur au moins 3/4 spire, de préférence sur 1 spire 1/2 jusqu'à 2 spires.

6. Dispositif de convoyage selon l'une ou plusieurs des revendications 1 à 3, caractérisé en ce que le pas de vis (16) formé par les pales (19) s'étend jusque dans l'intérieur du canal de convoyage (6), de préférence avec 1/2 spire jusqu'à 1 spire 1/4 (figures 2 et 3).

7. Dispositif de convoyage selon l'une ou plusieurs des revendications 1 à 6, caractérisé en ce que la longueur du canal de convoyage (6) depuis l'ouverture d'entrée (17) jusqu'à l'ouverture de sortie (12) est égale ou supérieure à :
a) la projection (24) de la spirale ininterrompue (18) dirigée vers l'axe de rotation du convoyeur à vis, plus
b) la projection (25) de la droite inclinée sous l'angle d'inclinaison (a) des matières en vrac et passant par l'extrémité de la spirale (18) située à proximité de l'ouverture d'entrée, sur l'axe de rotation (7) de la vis de convoyage (11), aussi loin que ladite droite (22) s'étend vers le haut jusqu'à son point de coupure avec la génératrice la plus haute du canal de convoyage (6).
